# EUROPEAN PATENT APPLICATION

(11) **EP 3 988 941 A1**
(43) Date of publication of application: **27.04.2022**
(21) Application number: 20832368.3
(22) Date of filing: 23.06.2020
(51) Int. Cl.: G01N 35/02

(54) **AUTOMATED ANALYZER AND REAGENT CONTAINER LID OPENING AND CLOSING MECHANISM**

(30) Priority: 24.06.2019 JP 2019116088
(71) Applicant: Sekisui Medical Co., Ltd., Tokyo 103-0027 (JP)
(72) Inventor: YAMAMURA, Satoshi, Tokyo 103-0027 (JP); YAGO, Hirokazu, Tokyo 103-0027 (JP); KONDOU, Junichi, Tokyo 103-0027 (JP); TAKAHASHI, Hiroshi, Tokyo 103-0027 (JP)
(74) Representative: Schäfer, Matthias W.
(86) International application number: PCT/JP2020/024563
(87) International publication number: WO 2020/262362

(57) **Abstract**

There are provided a reagent container lid opening and closing mechanism capable of opening and closing a reagent container lid with a simple structure and a simple operation, and an automated analysis device. A reagent container lid opening and closing mechanism of the invention includes an opening and closing operation body 106 being advanceable and retreatable, and including an opening and closing engagement portion to engage engagement portions 139 provided in upper surfaces of container lids 137 of reagent containers 135A, 135B, and 135C. The opening and closing operation body 106 is advanceable and retreatable along a longitudinal axis direction of the opening and closing operation body 106 between a retreated position X where the opening and closing operation body 106 is separated from the reagent containers, and an engaged position XX where an opening and closing engagement portion of the opening and closing operation body 106 engages the engagement portions 139 of the container lids. Further, the opening and closing operation body 106 is movable along a predetermined circular arc trajectory C between the engaged position XX and a lid opening position XXX where the container lids 137 are opened to a state where the reagent is extractable from the reagent containers.

## Description

### TECHNICAL FIELD

The present invention relates to an automated analysis device capable of obtaining measurement information on various analysis items by processing a sample (analyte) such as blood or urine with various reagents, and by measuring the processed sample, and a reagent container lid opening and closing mechanism thereof.

### BACKGROUND ART

In the related art, various forms of automated analysis devices such as a blood coagulation analysis device and an analysis and measurement device using immunoassay are known which are capable of obtaining measurement information on various analysis items by processing a biological sample such as blood or urine with various reagents, and by measuring the processed biological sample. For example, an analyte as a biological sample is dispensed from an analyte container into a reaction container, the dispensed analyte is mixed with a reagent according to a measurement item, and various measurements and analyses are performed thereon.

In the analyte analysis and measurement processing using such a reagent, a reagent corresponding to a predetermined analysis item is supplied from a reagent supply unit, and in that case, the reagent supply unit holds a plurality of reagent containers on a rotary table, the reagent containers storing reagents corresponding to various types of analysis items. For example, a reagent supply unit (reagent container storage device) of an analysis device disclosed in Patent Document 1 includes a reagent disk (rotary table) to hold three reagent containers in a radial direction, the reagent containers being laterally integrated by a frame, and when a container lid that closes an opening of each of the reagent containers is opened by a container lid opening and closing mechanism, a corresponding reagent is suctioned from each of the reagent containers by a nozzle, and is dispensed into a corresponding reaction container.

### CITATION LIST

### PATENT DOCUMENT

Patent Document 1: JP 2955613 B2

### SUMMARY OF THE INVENTION

### PROBLEM TO BE SOLVED BY THE INVENTION

By the way, the container lid opening and closing mechanism of the analysis device disclosed in Patent Document 1 includes an opening and closing mechanism unit, and a hook to be held by a hook holding portion, and is capable of opening and closing the container lid using the hook. Specifically, when the container lid is opened, the hook is moved forward toward the reagent container by the opening and closing mechanism unit, and then is stopped at the position of the reagent container, specifically, at a position at which a claw of the hook is not caught by an extension portion of the container lid. Then, the hook is lowered at the stop position by rotation of the hook holding portion around a rotation axis by a crank mechanism of the opening and closing mechanism unit, and then is further moved forward by the opening and closing mechanism unit, so that the hook is moved to a position at which the claw of the hook and the extension portion of the container lid overlap each other. Thereafter, at this time, the hook is raised by rotation of the hook holding portion around the rotation axis by the crank mechanism, to cause the claw of the hook to be hooked on the extension portion of the container lid, and the hook holding portion continues to be further rotated while maintaining the hooked state, to open the container lid.

Since such a container lid opening and closing mechanism has to repeat an advancing operation and a rotational operation a plurality of times to open the container lid (therefore, the container lid can be closed by a reverse operation), the structure and the operation become very complicated, thus leading to an increase in the size of the entire device and an increase in cost.

The invention is conceived in light of the above problems, and an object of the invention is to provide a reagent container lid opening and closing mechanism capable of opening and closing a reagent container lid with a simple structure and a simple operation, and an automated analysis device.

### MEANS FOR SOLVING PROBLEM

In order to achieve the above object, according to an aspect of the invention, there is provided a reagent container lid opening and closing mechanism provided in an automated analysis device to obtain measurement information on a predetermined analysis item by processing an analyte with a reagent to be supplied from a reagent supply unit and by measuring the processed analyte, to open and close a container lid in the reagent supply unit, the container lid closing an opening of a reagent container storing the reagent, the mechanism including: an opening and closing operation body being advanceable and retreatable, and including an opening and closing engagement portion to engage an engagement portion provided in an upper surface of the container lid of the reagent container; an advancing and retreating mechanism to advance and retreat the opening and closing operation body along a longitudinal axis direction of the opening and closing operation body between a retreated position where the opening and closing operation body is separated from the reagent container, and an engaged position where the opening and closing engagement portion of the opening and closing operation body engages the engagement portion of the container lid; and a rotation mechanism to move the opening and closing operation body along a predetermined circular arc trajectory between the engaged position and a lid opening position where the container lid to engage the opening and closing operation body is opened to a state where the reagent is extractable from the reagent container.

According to the reagent container lid opening and closing mechanism with the above configuration, the advancing and retreating mechanism is capable of moving the opening and closing operation body from the retreated position to the engaged position along the longitudinal axis direction (namely, moving the opening and closing operation body straight) to cause the opening and closing operation body to engage the container lid (engagement between the opening and closing engagement portion and the engagement portion), and in the engaged state, the reagent container lid can be opened only by a movement of the opening and closing operation body to the lid opening position along the circular arc trajectory by the rotation mechanism (therefore, the reagent container lid can be closed by a reverse operation). Therefore, the reagent container lid can be opened and closed with a simpler structure and a simpler operation than in the above-described related art such as Patent No. 2955613.

In addition, in the above configuration, it is preferable that the opening and closing engagement portion of the opening and closing operation body is formed to engage the engagement portions of the container lids of a plurality of the reagent containers at the engaged position simultaneously, the reagent containers being aligned along an advancing and retreating direction of the opening and closing operation body. Accordingly, a plurality of container lids can be opened simultaneously. Therefore, analysis and measurement processing can be efficiently (therefore, rapidly in a short period of time) performed.

In addition, the invention also provides an automated analysis device including the reagent container lid opening and closing mechanism having the above-described characteristics. According to such an automated analysis device, the same functions and effects as those of the above-described reagent container lid opening and closing mechanism can be obtained. In addition, particularly in such an automated analysis device, it is preferable that the reagent supply unit includes a plurality of reagent container units in each of which a plurality of the reagent containers are integrally formed to be arranged along a radial direction of a rotary table, and that the opening and closing engagement portion of the opening and closing operation body is formed to engage the engagement portions of the container lids of the plurality of reagent containers at the engaged position simultaneously, the reagent containers forming the reagent container unit. Accordingly, the reagent containers are unitized to allow a plurality of the container lids to be opened and closed simultaneously. Therefore, analysis and measurement processing can be efficiently (therefore, rapidly in a short period of time) performed.

In addition, in that case, it is further preferable that the rotary table is rotated at least between a container lid opening and closing position where the container lids are opened and closed by the reagent container lid opening and closing mechanism, and a reagent dispensing position where the reagent is to be dispensed to the analyte, and that a stirring device is provided at the container lid opening and closing position to stir the reagent inside the reagent containers. Accordingly, the reagent can be stirred by the stirring device immediately before the container lids are opened. Therefore, when the reagent containers are moved to the reagent dispensing positions immediately after the container lids are opened, the reagent can be dispensed while maintaining a homogeneous state. Therefore, a desired accurate analysis and measurement can be performed. This configuration is useful particularly for a reagent containing magnetic particles. The reason is that a homogeneous dispersion state of the magnetic particles can be secured by stirring the reagent immediately before the container lid is opened since the magnetic particles are likely to precipitate in the reagent containing the magnetic particles.

### EFFECT OF THE INVENTION

The invention provides the reagent container lid opening and closing mechanism capable of opening and closing the reagent container lid with a simple structure and a simple operation, and the automated analysis device.

### BRIEF DESCRIPTION OF DRAWINGS

Fig. 1 is an overall schematic exterior view of an automated analysis device according to one embodiment of the invention;
Fig. 2 is a schematic plan view illustrating an internal configuration of the automated analysis device in Fig. 1;
Fig. 3 is a plan view of a rotary table of a reagent supply unit including an opening and closing operation body of a reagent container lid opening and closing mechanism;
Fig. 4(a) is a partial plan view illustrating a state where container lids of all reagent containers of one of reagent storage units disposed adjacent to each other on the rotary table of the reagent supply unit are opened simultaneously by the opening and closing operation body, Fig. 4(b) is a front view of the state in Fig. 4(a), and Fig. 4(c) is a side view of the state in Fig. 4(a);
Fig. 5(a) is a partial plan view schematically illustrating a state where the container lids of all the reagent containers of the reagent storage unit are opened simultaneously by the opening and closing operation body, Fig. 5(b) is a view seen in direction A in Fig. 5 (a) and illustrating a state where the opening and closing operation body engages the container lids at a partially closed position, and Fig. 5 (c) is a view seen in direction A in Fig. 5(a) and illustrating a state where the container lids are opened by the opening and closing operation body;
Fig. 6 is a perspective view of the reagent storage unit in a state where the container lids are opened;
Fig. 7 is a perspective view of a container holder forming the reagent storage unit in Fig. 6;
Fig. 8(a) is a side view of the container holder in Fig. 7, and Fig. 8 (b) is a plan view of the container holder in Fig. 7 (view seen in direction B in Fig. 8(a));
Fig. 9 (a) is a view seen in direction C in Fig. 8(b), Fig. 9 (b) is a cross-sectional view taken along line D-D in Fig. 8(b), and Fig. 9(c) is a cross-sectional view taken along line E-E in Fig. 8(b);
Fig. 10(a) is a plan view of a container triplex unit (reagent container unit) that forms the reagent storage unit in Fig. 6 and that is stored and held in the container holder in Fig. 7, Fig. 10 (b) is a cross-sectional view taken along line F-F in Fig. 10(a), and Fig. 10 (c) is a cross-sectional view taken along line G-G in Fig. 10(a);
Fig. 11 is a perspective view illustrating a first modification example of an opening and closing operation body to open and close container lids individually;
Fig. 12 is a perspective view illustrating a second modification example of an opening and closing operation body to open and close container lids individually; and
Fig. 13 is a schematic block diagram of a drive mechanism of the automated analysis device.

### MODE(S) FOR CARRYING OUT THE INVENTION

Hereinafter, an embodiment of the invention will be described with reference to the drawings.

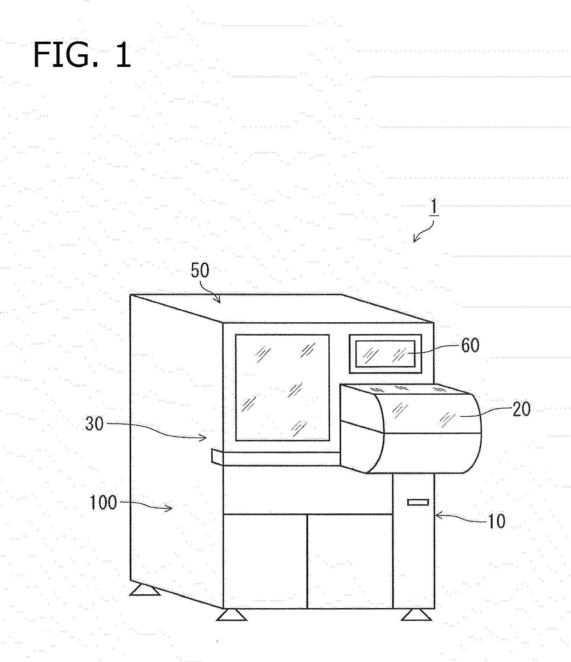

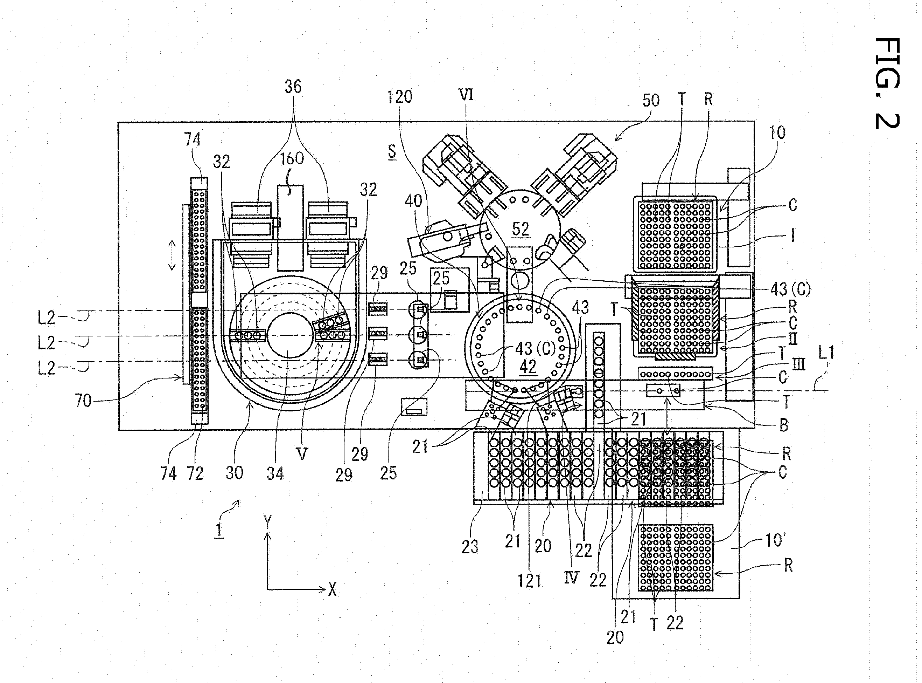

Fig. 1 is an overall schematic exterior view of an automated analysis device of the present embodiment, and Fig. 2 is a schematic plan view illustrating an internal configuration of an upper side of the automated analysis device in Fig. 1. As illustrated in these drawings, in an automated analysis device 1 of the present embodiment, a housing 100 forms an outer frame of the automated analysis device 1, and a space S in which various processing is to be performed on an analyte in an upper portion inside the housing 100 (hereinafter, simply referred to as a processing space) is formed. In addition, the automated analysis device 1 includes a conveyance unit 10 to convey a rack; an analyte supply unit 20 to supply a predetermined analyte such as a biological sample; a reagent supply unit 30 to supply a reagent corresponding to a predetermined analysis item; a reaction unit 40 to cause the analyte and the reagent to react with each other; and a processing and measurement unit (in the present embodiment, for example, a B/F separation and measurement unit to be described later) 50 to process the reacted analyte and to measure the processed analyte. The processing units 10, 20, 30, 40, and 50 are disposed inside a housing 100 (refer to Fig. 1). The conveyance unit 10 conveys a rack loaded with a predetermined number of disposable instruments to be used for analysis and measurement processing, for example, in the present embodiment, a rack R in which 60 nozzle tips T to suction the analyte and 60 reaction containers (for example, cuvettes) C into which the analyte is to be dispensed are arranged and held two-dimensionally, to a predetermined instrument extraction position II to be described later. In this case, the conveyance unit 10 is provided to extend vertically on one side inside the housing 100, and an upper side of the conveyance unit 10 is present in the processing space S. In addition, the analyte supply unit 20, the reagent supply unit 30, the reaction unit 40, and the measurement unit 50 are disposed in the processing space S.

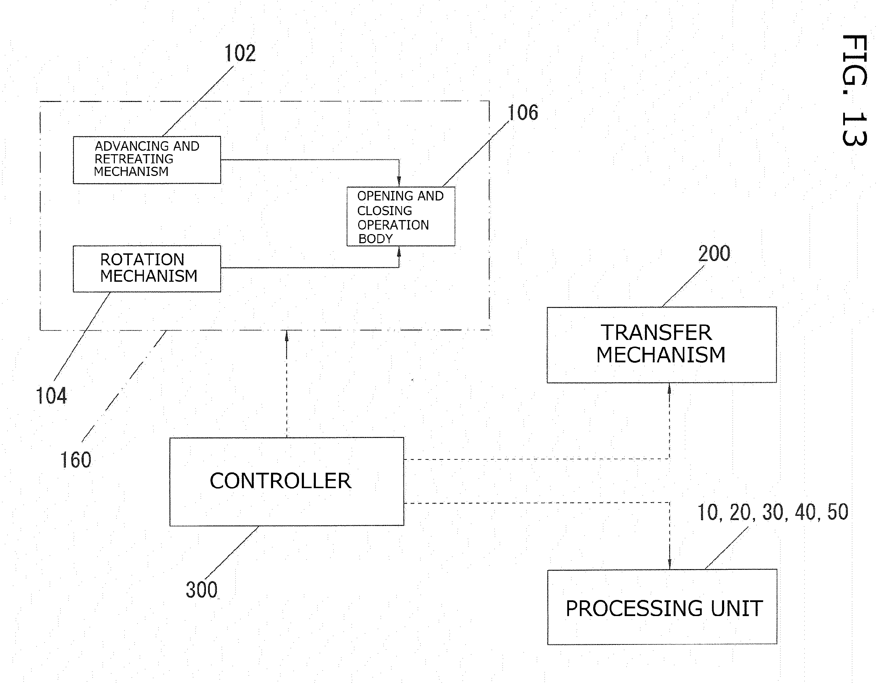

In addition, the automated analysis device 1 further includes a controller 300 (refer to Fig. 13) to control operation of the processing units 10, 20, 30, 40, and 50, and a transfer mechanism 200 (refer to Fig. 13) including various transfer units to move in an X-Y direction above the processing units 10, 20, 30, 40, and 50. The transfer mechanism 200 includes, for example, an instrument transfer unit, an analyte transfer unit, a reagent transfer unit, a measurement target transfer unit, etc. In Fig. 13, the various transfer units are collectively illustrated as the transfer mechanism 200. The transfer mechanism 200 is capable of grasping an instrument such as the nozzle tip T or the reaction container C using a grasping arm, etc., and moving the instrument in the X-Y direction so as to transfer the nozzle tip T, the reaction container C, etc., or to suction the analyte and the reagent by means of a nozzle. The controller 300 includes a control device body (not illustrated) and a display input unit 60 formed of, for example, a touch panel. Each transfer unit of the transfer mechanism 200 is controlled by the controller 300 to be movable in an X direction and a Y direction in an upper portion in the processing space S, for example, along rails extending in the X direction and the Y direction, and to be further movable (raisable and lowerable) in a vertical direction (Z direction) at a predetermined position.

The conveyance unit 10 conveys a plurality of the racks R loaded with unused nozzle tips T and unused reaction containers C inside the device 1 as follows. First, the plurality of racks R are raised in a vertically stacked state by a lifting mechanism to be conveyed toward a rack standby position (supply side position) I in the processing space S of the upper portion inside the housing 100. Thereafter, the racks R are moved from the rack standby position I to an extraction position (retrieval side position) II at which the nozzle tips T and the reaction containers C are to be extracted for analysis and measurement processing, and stand by for a transfer to a tip and reaction container standby position III by the instrument transfer unit (not illustrated). In addition, the racks R that are emptied by extraction of all the nozzle tips T and the reaction containers C are lowered sequentially by the lifting mechanism, and are retrieved.

Specifically, as indicated by an arrow in Fig. 2, an operator can draw the conveyance unit 10 to the outside of the device 1 along the Y direction (conveyance unit that is drawn out is denoted by reference sign 10' in Fig. 2) to retrieve the empty racks R from the conveyance unit 10, and to replenish the conveyance unit 10 with unused racks R loaded with the nozzle tips T and the reaction containers C.

In addition, in the present embodiment, the nozzle tip T and the reaction container C inside the rack R to be located at the extraction position II are held and transferred by a holding portion of the instrument transfer unit that is one transfer unit of the transfer mechanism 200, provisionally to be placed at the tip and reaction container standby position III located in the vicinity of the conveyance unit 10. However, in another modification example, the reaction container C may be directly transferred from the rack R to the reaction unit 40 and set by the holding portion of the instrument transfer unit without passing through the tip and reaction container standby position III.

Incidentally, as illustrated in Fig. 2, not only a place for the nozzle tips (position below the standby position III, at which two nozzle tips T and/or reaction containers C are illustrated) but also a place in which an operator can replace the nozzle tips T and/or the reaction containers C into each rack with a hand (position above the standby position III, at which one rack is illustrated) can be provided at the tip and reaction container standby position III.

The analyte supply unit 20 is disposed on an analyte table 23 that is movable along the X direction in Fig. 2, and a plurality of analyte racks 22 each having a box shape are arranged, for example, along a movement direction of the analyte table 23. In addition, each of the analyte racks 22 is loaded with a plurality of analyte containers 21, and each of the analyte containers 21 contains the analyte to be analyzed and measured. Particularly, in the present embodiment, for example, an operation mode is carried out in which the analyte supply unit 20 to be located on a right side in Fig. 2 moves to a left side in Fig. 2 at a predetermined timing in an analysis sequence of the automated analysis device 1, and one analyte rack 22 including the plurality of analyte containers 21 is transferred to an analyte suction position IV between the reaction unit 40 and the tip and reaction container standby position III, and stands by at this position.

Since the tip and reaction container standby position III is provided, a first uniaxial transfer line (analyte transfer line) L1 on which the tip and reaction container standby position III, the analyte suction position IV, and at least a part of the reaction unit 40 are lined up along a straight line is formed in the processing space S. For this reason, a series of operations such as the installation of the analyte suction nozzle to the nozzle tip T, the suctioning of the analyte, and the dispensing of the analyte into the reaction containers can be completed only by a movement of the analyte transfer unit (not illustrated) including an analyte suction nozzle along the first uniaxial transfer line in a uniaxial direction (X-axis direction). Specifically, first, the analyte suction nozzle (not illustrated) is moved in a positive direction of an X axis (right direction in Fig. 2) by the analyte transfer unit, and the nozzle tip T placed at the tip and reaction container standby position III provisionally is to be connected to a distal end of the analyte suction nozzle (when connected, the analyte suction nozzle is raised and lowered in a Z-axis direction by the analyte transfer unit). Thereafter, the analyte suction nozzle is further moved in a negative direction of the X axis (left direction in Fig. 2) while holding the nozzle tip T at the distal end, suctions the analyte through the nozzle tip T from the analyte container 21 that stands by at the analyte suction position IV, and is further moved toward the reaction unit 40 in the negative direction of the X axis.

At this time, the unused reaction container C placed at the tip and reaction container standby position III provisionally is already transferred to and set in the reaction unit 40 by the instrument transfer unit that is one transfer unit of the transfer mechanism 200, and is on standby. Therefore, the analyte suction nozzle dispenses (discharges) the analyte, which is suctioned through the nozzle tip T, into the reaction container C in the reaction unit 40 located on the first uniaxial transfer line L1. Thereafter, the analyte transfer unit moves the analyte suction nozzle in the positive direction of the X axis toward a tip disposal unit 121 located on the first uniaxial transfer line L1 (provided between the reaction unit 40 and the analyte suction position IV), and the used nozzle tip T is separated from the analyte suction nozzle, and is disposed of by the tip disposal unit 121.

The reaction unit 40 includes a rotary table 42 that is to be driven rotationally, and a plurality of reaction container-supporting portions 43 are provided at predetermined intervals over an entire periphery of an outer peripheral portion of the rotary table 42. The unused reaction container C is transferred to and set in the reaction container-supporting portion 43 by the instrument transfer unit including the holding portion as described above. Then, as described above, the analyte is discharged from the analyte suction nozzle into the reaction container C that is rotated to an analyte receiving (dispensing) position (located on the first uniaxial transfer line L1) by the rotary table 42.

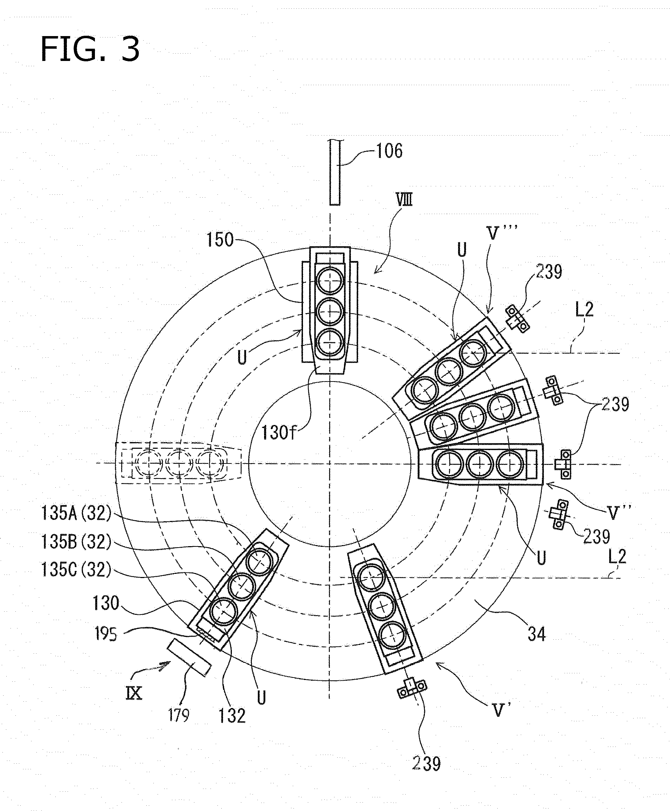

In the reagent supply unit 30, a plurality of reagent storage portions 32 that store reagents corresponding to various types of analysis items are held, for example, in a unit form by a rotary table 34, and the reagent storage portion 32 corresponding to an analysis item in the reaction unit 40 is moved to each corresponding reagent suction position V by rotation of the rotary table 34 (only one reagent suction position is denoted by reference sign V in Fig. 2) located on a second uniaxial transfer line L2 to be described later. In the reagent supply unit 30 of the present embodiment, as clearly illustrated in Fig. 3, a plurality of reagent storage units U are radially arranged in a radial direction of the rotary table 34. The reagent storage unit U is configured such that a reagent container unit 132 formed of an elongated reagent container in which the plurality of reagent storage portions 32 are connected or integrally formed is stored and held inside a container holder 130.

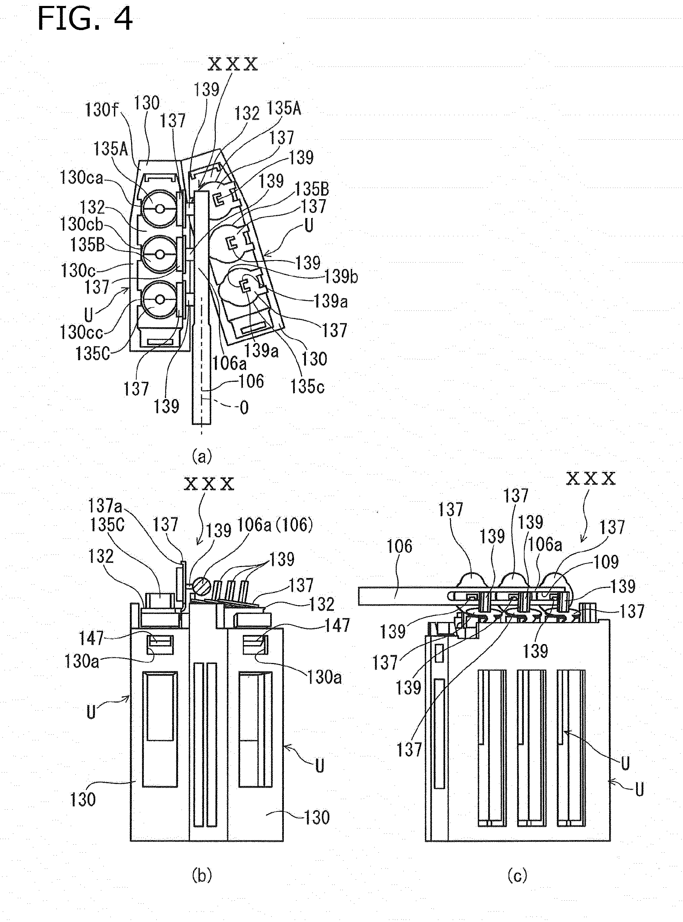

In the present embodiment, for example, the reagent storage unit U stores and holds the container triplex unit (reagent container unit) 132, in which three reagent containers 135A, 135B, and 135C (reagent storage portions 32) are connected or integrally formed to be arranged along the radial direction of the rotary table 34, inside the container holder 130. In the reagent supply unit 30 of the present embodiment, an example is illustrated in which a predetermined number of such reagent storage units U are radially arranged in a circumferential direction of the rotary table 34. In addition, the reagent supply unit 30 further includes a cooling device 36 (refer to Fig. 2) to cool the reagent, and a reagent container lid opening and closing mechanism 160 to be described later to open and close container lids 137 (refer to Figs. 4 to 6) simultaneously, that close openings of the reagent containers 135A, 135B, and 135C forming the reagent storage unit U (refer to Figs. 2 and 13).

A conductive tip supply unit 70 is provided on an outer side of the reagent supply unit 30, namely, at a position that is adjacent to the reagent supply unit 30 and is opposite the reaction unit 40. The conductive tip supply unit 70 includes a rack 74 loaded with a plurality of conductive tips 72, and connects the conductive tip 72 to a distal end of a reagent suction nozzle as needed when an analysis item is analyzed for which a nozzle is difficult to share with a normal analysis item. Specifically, the conductive tip supply unit 70 moves the rack 74 along the Y direction under position control using a position sensor, to locate the conductive tips 72 on the rack 74 on the second uniaxial transfer line L2 to be described later. Incidentally, a plurality (three in the present embodiment) of nozzle cleaning units 29 to clean the reagent suction nozzle and a plurality (three in the present embodiment) of tip disposal units 25 to dispose of the tip are provided between the reagent supply unit 30 and the reaction unit 40 to be located on the second uniaxial transfer line L2 to be described later.

In a region of the processing space S in which the conductive tip supply unit 70, the reagent supply unit 30, the nozzle cleaning unit 29, the tip disposal unit 25, and the reaction unit 40 are lined up along a straight line, the second uniaxial transfer line (reagent transfer line) L2 is formed on which the reagent transfer unit (not illustrated) for a reagent transfer that is one transfer unit of the transfer mechanism 200 moves only in the uniaxial direction (X-axis direction) along the straight line. Particularly, in the present embodiment, since the three nozzle cleaning units 29 and the three tip disposal units 25 are provided, three second uniaxial transfer lines L2 are also provided (certainly, the number of the second uniaxial transfer lines L2 is not limited to 3, and may be 4 or more or may be 2 or less) . Specifically, a holding portion that holds the reagent suction nozzle (not illustrated) is moved only in the X-axis direction along each of the second uniaxial transfer lines L2 by the reagent transfer unit.

Regarding a normal analysis item, the reagent suction nozzle corresponding to each of the second uniaxial transfer lines L2 directly suctions a reagent corresponding to an analysis item from the reagent storage portion 32 to be located at the reagent suction position V on the rotary table 34 through a nozzle suction portion at a distal end of the reagent suction nozzle in the reagent supply unit 30, and thereafter, is moved in the positive direction of the X axis toward the reaction unit 40. At this time, in the reaction unit 40, the reaction container C that has already received the analyte at the above-described analyte receiving position is rotated to a reagent receiving position by the rotary table 42. Therefore, each of the reagent suction nozzles is capable of dispensing (discharging) the suctioned reagent into the corresponding reaction container C. Thereafter, each of the reagent suction nozzles is moved along the negative direction L 2 of the X axis, and is cleaned in the corresponding nozzle cleaning unit 29.

On the other hand, in the case where an analysis item is analyzed for which a nozzle is difficult to share with a normal analysis item, for example, when nozzle cleaning alone is not sufficient, the conductive tip 72 may be connected to the distal end of the reagent suction nozzle as needed. In such a case, it is preferable that the conductive tip 72 is connected to the distal end of the reagent suction nozzle in the conductive tip supply unit 70 on the second uniaxial transfer line L2 before the reagent is suctioned in the reagent supply unit 30 (when connected, the reagent suction nozzle is raised and lowered in the Z-axis direction by the reagent transfer unit) . When the conductive tip 72 is connected, the reagent suction nozzle is further moved in the positive direction of the X axis while holding the conductive tip 72 at the distal end, and suctions the reagent through the conductive tip 72 in the reagent supply unit 30. The reagent suction nozzle that has suctioned the reagent is further moved in the positive direction of the X axis toward the reaction unit 40, and dispenses (discharges) the reagent into the reaction container C located at the reagent receiving position as described above. Thereafter, the used reagent suction nozzle is moved in the negative direction of the X axis toward a corresponding tip disposal unit 25 of the tip disposal units 25 by the reagent transfer unit, and the used conductive tip 72 is separated from the reagent suction nozzle, and is disposed of by the tip disposal unit 25.

A mixed liquid of the analyte and the reagent dispensed into the reaction container C as described above in the reaction unit 40 is subjected to a reaction on the rotary table 42 at a predetermined temperature for a predetermined time, and thereafter, the reaction container C in which a reaction product is formed is rotated to a reaction container extraction position VI by rotation of the rotary table 42. The reaction container C located at the reaction container extraction position VI is grasped and introduced into the processing and measurement unit 50 by a holding portion (grasping arm, etc.) to be transferred by the measurement target transfer unit (not illustrated) that is one transfer unit of the transfer mechanism 200.

The processing and measurement unit 50 performs predetermined processing on the introduced reaction product, and executes measurement electrically and optically. Specifically, for example, in analysis and measurement using immunoassay, B/F separation is performed to clean and dispose of a labeled antibody that does not form an immune complex, a cleaning unit and a stirring unit for that purpose and a magnet to be used for the B/F separation are provided, and a measurement unit 120 is also provided which suctions a processed product processed thereby to measure the processed product on a lower side based on electrochemiluminescence. In that case, the processing and measurement unit 50 may be called a B/F separation and measurement unit 50. Incidentally, the used reaction container C on which the measurement is completed is moved to a predetermined position by rotation of a rotary table 52, is grasped by a holding portion to be transferred by a corresponding transfer unit forming the transfer mechanism 200, and is disposed of by a predetermined disposal unit.

Next, the reagent supply unit 30 of the present embodiment described above will be described in further detail.

As clearly illustrated in Fig. 3, as described above, for example, the reagent supply unit 30 includes the plurality of reagent storage units U each being configured such that the container triplex unit (reagent container unit) 132 in which the three reagent containers 135A, 135B, and 135C (reagent storage portions 32) are integrally formed to be arranged along the radial direction of the rotary table 34 is stored and held inside the container holder 130. In this case, the rotary table 34 is rotated at least between a container lid opening and closing position VIII at which the container lid 137 of each of the reagent containers 135A, 135B, and 135C is opened and closed by an opening and closing operation body 106 to be described later of the reagent container lid opening and closing mechanism 160, and the reagent suction position V described above. The reagent suction position V includes three reagent dispensing positions V', V", and V‴ corresponding to the three respective second uniaxial transfer lines (reagent transfer lines) L2, and the reagent stored in each of the reagent containers 135A, 135B, and 135C are dispensed to the analytes at the reagent dispensing positions V', V", and V‴. Specifically, at a first reagent dispensing position V', the reagent is dispensed (suctioned) from a first reagent container 135A located innermost in the radial direction, at a third reagent dispensing position V‴, the reagent is dispensed (suctioned) from a third reagent container 135C located outermost in the radial direction, and at a second reagent dispensing position V", the reagent is dispensed (suctioned) from a second reagent container 135B located between the first and third reagent containers 135A and 135C. Incidentally, in the present embodiment, the container triplex unit including three reagent containers is provided as an example; however, the number of the reagent containers is not limited to 3, and may be 2 or may be 4 or more.

In addition, at predetermined positions along a rotation direction of the rotary table 34, specifically, at least the reagent dispensing positions V', V", and V‴, positions sensors 239 to detect the arrival of the reagent storage unit U at these positions are provided. In addition, the rotary table 34 also has a data code reading position IX in addition to the container lid opening and closing position VIII and the three reagent dispensing positions V', V", and V‴, and at the data code reading position IX, a two-dimensional barcode reader reads required data from a two-dimensional barcode affixed to the container triplex unit 132. Incidentally, it is preferable that a window for data reading (not illustrated) is provided at the data code reading position IX, and that a fan (not illustrated) is provided to prevent dew condensation on the window. In addition, although not illustrated, a one-dimensional barcode is affixed to a central portion of the rotary table 34, and accordingly, the non-mounting or improper installation of the container triplex unit 132 in the container holder 130 can be monitored.

In addition, it is preferable that a stirring device 150 to stir the reagent inside the reagent container is provided at the container lid opening and closing position VIII. A non-contact stirring rod of the stirring device 150 below the reagent storage unit U imparts, for example, an intermittent centrifugal rotation action on a reagent container in a state where the container lid 137 of each of the reagent containers 135A, 135B, and 135C of the reagent storage unit U to be located at the container lid opening and closing position VIII is at a closed position (in the present embodiment, closed position at which the container lid 137 is opened partially or slightly as will be described later), so that the reagent inside the container can be stirred. Incidentally, the operating principle of the stirring device 150 is not limited thereto, and various operating principles can be adopted. In addition, in the present embodiment, the first to third reagent containers 135A to 135C are set as targets to be stirred by the stirring device 150; however, the invention is not limited thereto, and a configuration may be employed in which some of the reagent containers can be stirred or reagent containers can be stirred individually.

In the reagent supply unit 30 having such a configuration, at the container lid opening and closing position VIII, after the reagent containers of the reagent storage unit U are stirred by the stirring device 150, the container lid 137 of each of the reagent containers 135A, 135B, and 135C is opened by the opening and closing operation body 106 to be described later of the reagent container lid opening and closing mechanism 160. Thereafter, the reagent containers 135A, 135B, and 135C are moved to the reagent dispensing positions V', V", and V‴ respectively by rotation of the rotary table 34, and the dispensing of the reagent is performed. Then, the reagent storage unit U for which all dispensing is completed returns to the container lid opening and closing position VIII again when the rotary table 34 is rotated, and at this position, the container lid 137 of each of the reagent containers 135A, 135B, and 135C is closed to the above-described closed position by the opening and closing operation body 106 of the reagent container lid opening and closing mechanism 160.

Subsequently, the reagent container lid opening and closing mechanism 160 will be described in further detail with reference to Figs. 4, 5, and 13. As illustrated in these drawings, the reagent container lid opening and closing mechanism 160 includes the opening and closing operation body 106 that is advanceable and retreatable and that includes an opening and closing engagement portion (illustrated as an engagement groove 109: refer to Fig. 4(c)) disengageably to engage engagement portions 139 provided in an upper surface of the container lid 137 of each of the reagent containers 135A, 135B, and 135C; an advancing and retreating mechanism 102 to advance and retreat the opening and closing operation body 106 along a longitudinal axis O direction of the opening and closing operation body 106; and a rotation mechanism 104 to drive the opening and closing operation body 106 to be rotated.

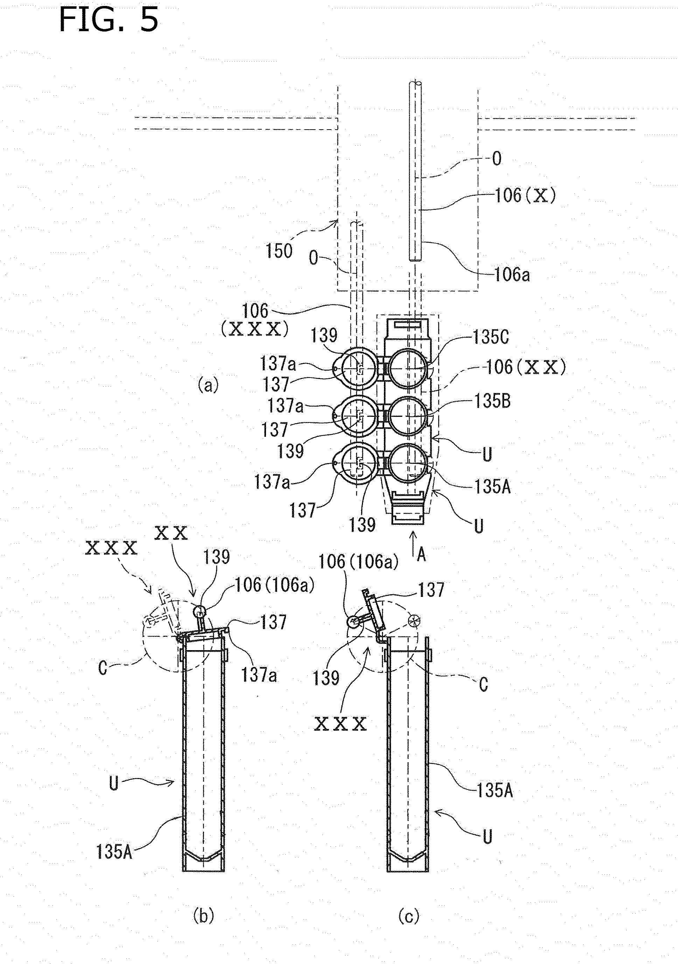

The advancing and retreating mechanism 102 advances and retreats the opening and closing operation body 106 along the longitudinal axis O direction thereof between a retreated position X at which the opening and closing operation body 106 is separated from each of the reagent containers 135A, 135B, and 135C, and an engaged position XX at which the engagement groove 109 of the opening and closing operation body 106 engages the engagement portions 139 of the container lids 137. The rotational drive mechanism 104 rotates and moves the opening and closing operation body 106 along a predetermined circular arc trajectory C (refer to Figs. 5(b) and 5(c)), for example, as illustrated in Fig. 4, to a rotation angle (for example, 90°) at which the engagement portions 139 of the adjacent reagent container unit U and the opening and closing operation body 106 do not interfere with each other. Accordingly, the container lid 137 is moved from the engaged position XX to a lid opening position XXX. The lid opening position XXX is a position at which the container lids 137 are opened to a state where the reagent can be extracted from each of the reagent containers 135A, 135B, and 135C.

Incidentally, in Fig. 4(c), a through groove penetrating through the opening and closing operation body 106 is illustrated as the engagement groove 109; however, the engagement groove may be a groove that does not penetrate through the opening and closing operation body 106 but has a depth to the middle thereof. Further, in the embodiment illustrated in Fig. 4(c), etc., the opening and closing engagement portion illustrated as the engagement groove 109 is not limited to having a groove shape, and may disengageably engage the engagement portion 139 of a lid portion to enable the opening and closing of the container lid 137 when the opening and closing operation body 106 performs a rotational operation, for example, may have an L shape or other shapes (the same applies to the following examples). In the case of an L shape, when the opening and closing operation body 106 performs a rotational operation, the opening and closing engagement portion may abut the container lid 137 to perform a closing operation. In addition, the advancing and retreating mechanism 102 and the rotation mechanism 104 may include, for example, a drive motor and a power transmission mechanism including a gear train or a link mechanism, and may further include an actuator such as a piston. Further, the invention is not limited thereto, and other well-known commonly-used techniques are appropriately applicable to performing a rotational operation and an advance and retreat operation.

The opening and closing operation body 106 has, for example, a rod shape, and is disposed on the same side as the cooling device 36 to face the reagent container unit U to be located at the container lid opening and closing position VIII from outside in the radial direction of the rotary table 34 (refer to Fig. 3). In addition, the engagement groove 109 (refer to Fig. 4(c)) of the opening and closing operation body 106 is formed as a slitting groove having a substantially U-shaped cross section and extending along the longitudinal axis O direction to engage the engagement portions 139 of the container lids 137 of the three reagent containers 135A, 135B, and 135C at the engaged position XX simultaneously, the reagent containers 135A, 135B, and 135C being aligned along an advancing and retreating direction of the opening and closing operation body 106 (longitudinal axis O direction and the radial direction of the rotary table 34), and forms an operation portion 106a (refer to Fig. 4(a)) of the opening and closing operation body 106. Incidentally, the engagement portion 139 of the container lid 137 to engage the engagement groove 109 of the opening and closing operation body 106 has, for example, a U-shaped cross section (refer to Fig. 4(a)), and end portions of extension portions 139a (refer to the same drawing) extending from both of a surface on one side of a linear portion 139b (refer to the same drawing) of the engagement portion 139 and a surface on the other side of the linear portion 139b engage both side surfaces of the engagement groove 109 in an abutting state (refer to Figs. 4(a) and 4(c)).

When the reagent container lid opening and closing mechanism 160 having such a configuration opens the container lids 137 of the reagent containers 135A, 135B, and 135C of the reagent container unit U to be located at the container lid opening and closing position VIII, first, the opening and closing operation body 106 at the retreated position X illustrated on a left upper side of Fig. 5 (a) is advanced toward the reagent container unit U by the advancing and retreating mechanism 102. Then, when the opening and closing operation body 106 is advanced to the engaged position XX illustrated on a left lower side of Fig. 5(a) and Fig. 5(b), the engagement portions 139 of the container lids 137 of the three reagent containers 135A, 135B, and 135C engage the engagement groove 109 of the opening and closing operation body 106 simultaneously. When the advancing operation of the opening and closing operation body 106 is stopped at the engaged position XX, subsequently, the opening and closing operation body 106 is moved to the lid opening position XXX illustrated on a right lower side of Fig. 5(a), Fig. 4, and Fig. 5(c) along the predetermined circular arc trajectory C (refer to Figs. 5(b) and 5(c)) by the rotation mechanism 104 while maintaining a state of engagement with the container lid 137. At the lid opening position XXX, the container lids 137 are opened to the state where the reagent can be extracted from each of the reagent containers 135A, 135B, and 135C, and to the rotation angle at which the engagement portions 139 of the adjacent reagent container unit U and the opening and closing operation body 106 do not interfere with each other. Incidentally, the reagent container lid opening and closing mechanism 160 performs a series of the above-described lid opening operations in reverse order on the reagent container unit U that returns to the container lid opening and closing position VIII again after the completion of reagent dispensing as described above, to close three container lids 137 simultaneously. Alternatively, the container lid 137 may be closed immediately after the reagent is suctioned.

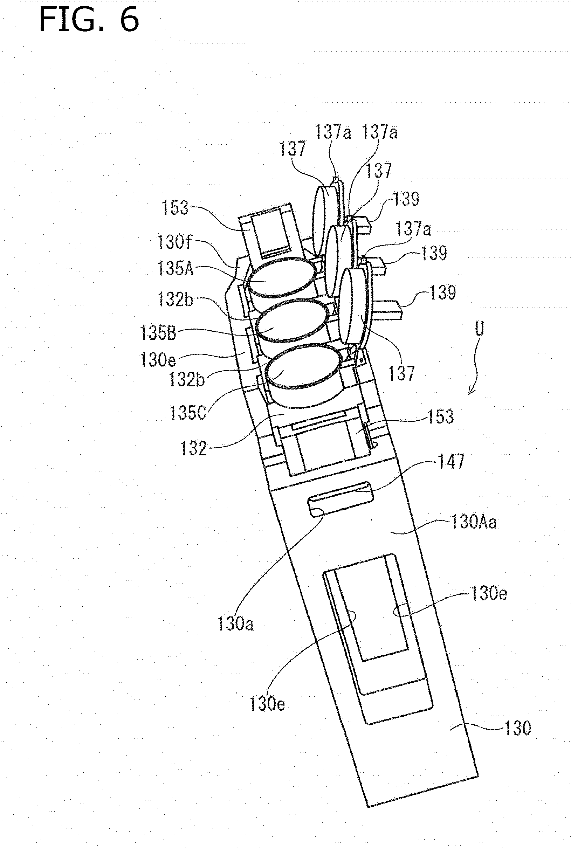

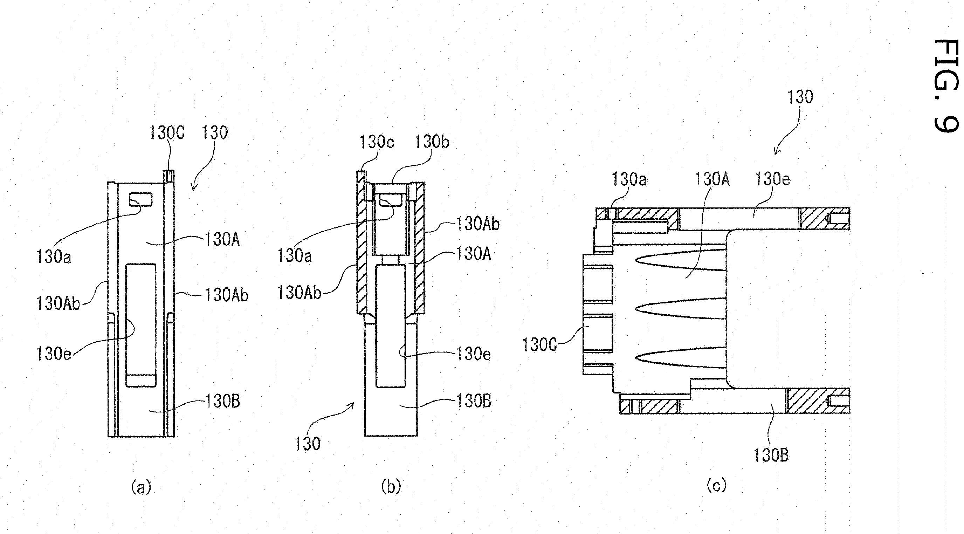

Finally, the reagent storage unit U will be described in further detail with reference to Figs. 6 to 10.

As described above, for example, the reagent storage unit U is configured to store and hold the container triplex unit 132, in which the three reagent containers 135A, 135B, and 135C are integrally formed to be arranged along the radial direction of the rotary table 34, inside the container holder 130.

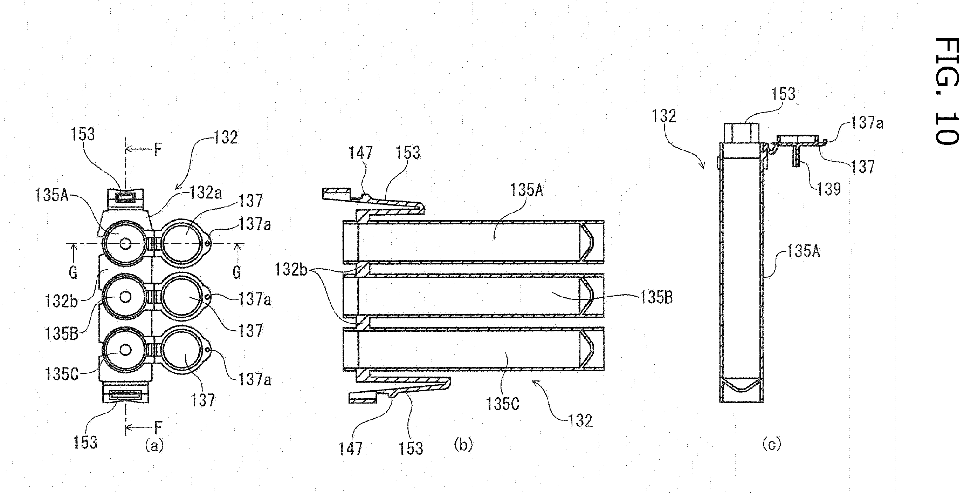

Figs. 6 and 10 illustrate an example in which the container triplex unit 132 includes a connection frame 132b that connects the three reagent containers 135A, 135B, and 135C, and locking portions 153, which disengageably lock the container triplex unit 132 to the container holder 130, on both sides in an alignment direction in which the three reagent containers 135A, 135B, and 135C are aligned. In addition, the locking portion 153 is elastically expandable and contractible, and includes a locking protrusion portion 147 to lock to a locking hole 130a to be described later of the container holder 130 elastically.

Incidentally, it is preferable that an end portion of the container triplex unit 132 located to be oriented toward a radially inner side of the rotary table 34 is a tapered portion (thickness reduction portion) 132a formed to taper off (refer to Fig. 10(a)), and that correspondingly, a corresponding end portion of the container holder 130 to store and hold the container triplex unit 132 also is a tapered portion (thickness reduction portion) 130f (refer to Figs. 6 to 8) formed to taper off. Accordingly, as partially illustrated on a right side of Fig. 3, each of the reagent storage units U is adjacently disposed without interfering with the reagent storage unit U adjacent thereto on the radially inner side of the rotary table 34, and as a result, as many the reagent container units U as possible can be compactly disposed on the rotary table 34 without forming a waste space.

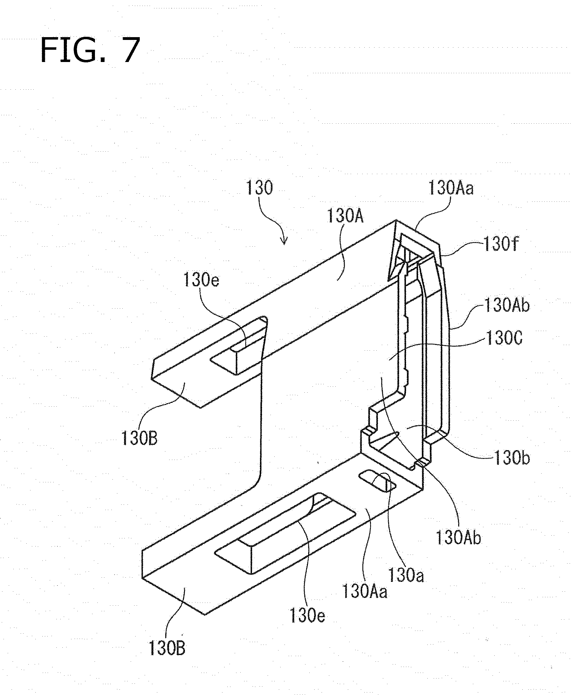

Meanwhile, particularly, as illustrated in Figs. 7 to 9, the container holder 130 to store and hold the container triplex unit 132 includes a holder body 130A and a pair of legs 130B extending from the holder body 130A to be assembled to a rotary table 34 side. The holder body 130A is formed in a frame shape to define an insertion hole 130b into which the container triplex unit 132 is to be inserted in a fitted state. Incidentally, it is preferable that a lightening hole 130e as illustrated in Fig. 7 is provided in the container triplex unit 132 from the holder body 130A to the legs 130B for the purpose of weight reduction, etc.

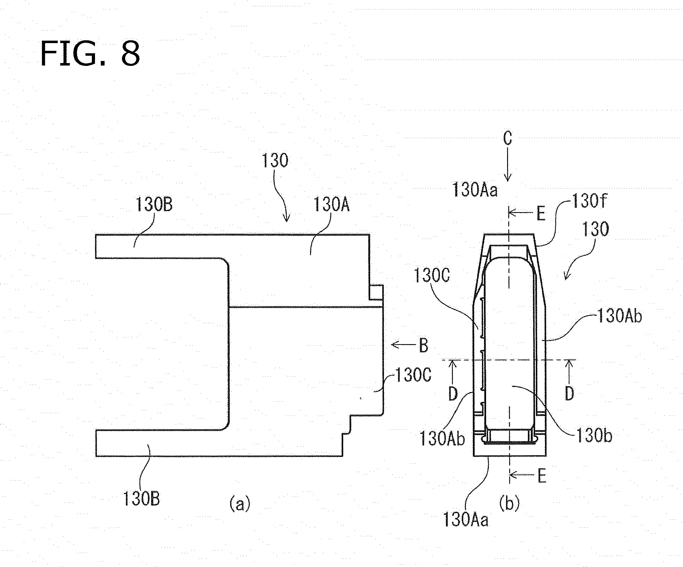

In addition, each of vertical side walls 130Aa (refer to Figs. 7 and 8) of the holder body 130A to be located on both sides in the alignment direction of the reagent containers 135A, 135B, and 135C is provided with the locking hole 130a to which the locking protrusion portion 147 of the locking portion 153 of the container triplex unit 132 can lock when the container triplex unit 132 is fitted and inserted into the insertion hole 130b of the container holder 130. Therefore, when the container triplex unit 132 is fitted and inserted into the insertion hole 130b of the container holder 130, the locking portions 153 of the container triplex unit 132 are first pressed by an inner wall of the holder body 130A, and are elastically contracted inward, the inner wall forming the insertion hole 130b. When the insertion of the container triplex unit 132 is further continued from that state, a pressed state of the locking portions 153 is released and the locking portions 153 expand outward at the complete insertion position of the container triplex unit 132, at which the locking protrusion portions 147 of the locking portions 153 are aligned with the locking holes 130a. Therefore, the locking protrusion portions 147 elastically protrude into the locking holes 130a to lock to the locking holes 130a, and as a result, the container triplex unit 132 is held inside the container holder 130 in a locked state. Incidentally, when the locking protrusion portions 147 are pushed inward through the locking holes 130a to release the state of locking between the locking protrusion portions 147 and the locking holes 130a, the container triplex unit 132 can be removed from the container holder 130.

In addition, it is preferable that the reagent storage unit U is configured to also include a container lid partial opening mechanism to open the container lid 137 of each of the reagent containers 135A, 135B, and 135C partially (or slightly) when the container triplex unit 132 is fitted and inserted into the container holder 130. For example, the container lid partial opening mechanism can be configured such that when the reagent container unit U is inserted and fitted into the container holder 130, a peripheral edge portion of a container lid portion 137 of the reagent container unit U abuts and engages a raised portion (protrusion portion) 130c (refer to Fig. 7) of one side surface of the container holder 130, and the container lid portion is slightly pushed in a release direction to be opened partially. Further, a configuration may be employed in which while adjusting the opening amount of the container lid portion 137, the container lid 137 can be partially opened more reliably by providing a projection having a predetermined height in the container lid 137 at a position at which the container lid 137 abuts and engages the raised portion 130c. Figs. 4 to 6 illustrate an example in which a projection 137a is provided at a peripheral end edge of an inner surface of each of the container lids 137 and the projection 137a and the raised portion 130c of the container holder 130 engage each other to open the container lid 137 partially. When the container triplex unit (reagent container unit) 132 is fitted and inserted into the container holder 130, the raised portion 130c abuts the projection 137a of the container lid 137, and pushes the container lid 137 upward by a predetermined amount to open the container lid 137 partially (or slightly) .

In the case where the container lid partial opening mechanism is provided, it is preferable that in the raised portion 130c, one lateral side wall 130Ab of a pair of lateral side walls 130Ab of the holder body 130A is set to a dimension higher than that of the other lateral side wall 130Ab, the lateral side walls 130Ab extending along the alignment direction of the reagent containers 135A, 135B, and 135C in a state where the container triplex unit 132 is fitted and inserted into the insertion hole 130b of the container holder 130. In Fig. 4(a), in the raised portion 130c, three abutting portions 130ca, 130cb, and 130cc are illustrated as abutting portions that face and abut the projections 137a of the container lids 137. Incidentally, in Figs. 7 to 9, an upper end portion of the raised portion 130c has a height that is uniform along the alignment direction of the three reagent containers 135A, 135B, and 135C; however, the raised portion may be shaped to protrude partially only at positions at which the raised portion abuts the container lids 137.

Therefore, in this configuration example, when the container triplex unit 132 is fitted and inserted into the container holder 130, the raised portion 130c of the container holder 130 abuts the projections 137a of the container lids 137 to push the container lids 137 upward by a predetermined amount, so that the container lids 137 are unlocked and the container lids 137 are slightly floated. Therefore, the reagent containers 135A, 135B, and 135C are partially opened. As a result, at the engaged position XX, the opening and closing operation body 106 of the reagent container lid opening and closing mechanism 160 described above engages the engagement portions 139 of the container lids 137 at the above-described closed position at which the container lids 137 are partially opened (for example, as illustrated in Fig. 5 (b), the container lids 137 are inclined from a horizontal state at the closed position).

Incidentally, Figs. 4, 5, 6, and 10 illustrate an example in which the three container lids 137 are opened partially and simultaneously; however, a configuration may be employed in which the container lids 137 are opened partially and individually.

As described above, according to the reagent container lid opening and closing mechanism 160 of the present embodiment, the advancing and retreating mechanism 102 is capable of moving the opening and closing operation body 106 from the retreated position X to the engaged position XX along the longitudinal axis O direction (namely, moving the opening and closing operation body 106 straight) to cause the opening and closing operation body 106 to engage the container lids 137 (engagement between the engagement groove 109 and the engagement portions 139), and in the engaged state, the container lids 137 can be opened only by a movement of the opening and closing operation body 106 to the lid opening position XXX along the circular arc trajectory C by the rotation mechanism 104 (therefore, the container lids 137 can be closed by a reverse operation). Therefore, the container lids 137 can be opened and closed with a simpler structure and a simpler operation than in the above-described related art such as Patent No. 2955613.

In addition, in the present embodiment, since the engagement groove 109 of the opening and closing operation body 106 is formed to engage the engagement portions 139 of the container lids 137 of the three reagent containers 135A, 135B, and 135C at the engaged position XX simultaneously, the reagent containers 135A, 135B, and 135C being aligned along the advancing and retreating direction of the opening and closing operation body 106, the three container lids 137 can be opened and closed simultaneously. Therefore, analysis and measurement processing can be efficiently (therefore, rapidly in a short period of time) performed.

In addition, according to the present embodiment, it is preferable that the stirring device 150 is provided at the container lid opening and closing position VIII of the reagent supply unit 30 to stir the reagent inside the reagent containers 135A, 135B, and 135C. Accordingly, the reagent can be stirred by the stirring device 150 immediately before the container lids 137 are opened. Therefore, when the reagent is suctioned immediately after the container lids are opened, and the reagent containers 135A, 135B, and 135C are moved to the reagent dispensing positions, the reagent can be dispensed while maintaining a homogeneous state. As a result, a desired accurate analysis and measurement can be performed. This configuration is useful particularly when a reagent containing magnetic particles is used as in the present embodiment. The reason is that a homogeneous dispersion state of the magnetic particles can be secured by stirring the reagent immediately before the container lid 137 is opened since the magnetic particles are likely to precipitate in the reagent containing the magnetic particles.

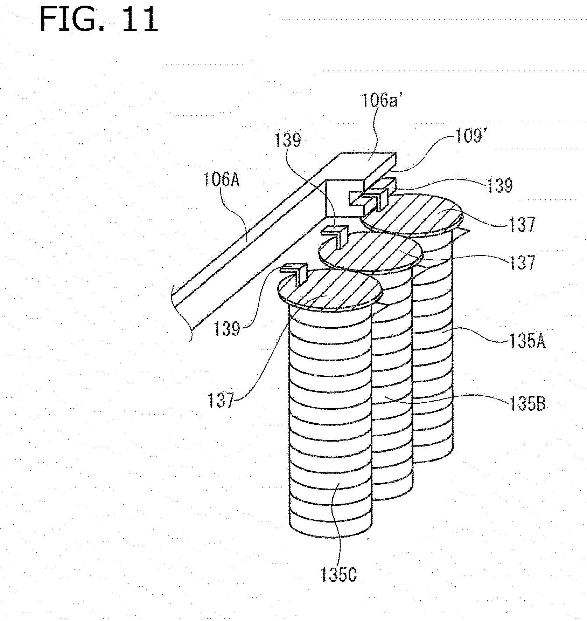

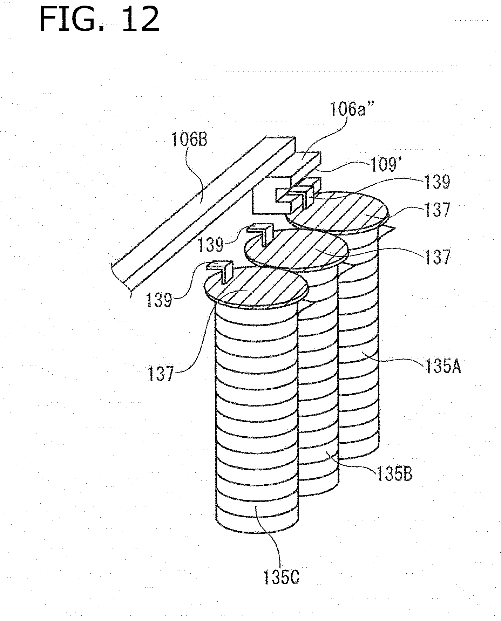

By the way, in the above-described embodiment, the configuration is provided as an example in which the opening and closing operation body 106 of the reagent container lid opening and closing mechanism 160 opens and closes the container lids 137 of the three reagent containers 135A, 135B, and 135C simultaneously. However, the invention is not limited thereto, and an opening and closing operation body may be configured to open and close the container lids 137 of a plurality (not limited to 3) of the reagent containers individually. Modification examples of such an opening and closing operation body are illustrated in Figs. 11 and 12. Namely, an opening and closing operation body 106A according to a first modification example illustrated in Fig. 11 includes an operation portion 106a' including an engagement groove 109' at a distal end of the opening and closing operation body 106A, the engagement groove 109' extending by a length that allows engagement with only the engagement portion 139 of one reagent container 135A (135B or 135C) . In this case, the operation portion 106a' is provided in a side surface of the opening and closing operation body 106A. On the other hand, an opening and closing operation body 106B according to a second modification example illustrated in Fig. 12 includes an operation portion 106a" including the engagement groove 109' at a distal end of the opening and closing operation body 106B, the engagement groove 109' extending by a length that allows engagement with only the engagement portion 139 of one reagent container 135A (135B or 135C), and in this case, the operation portion 106a" is provided in a lower surface of the opening and closing operation body 106A. According to the such individual opening and closing-type opening and closing operation bodies 106A and 106B, the scattering of the reagent, the mixing of foreign objects, etc. can be prevented, which is beneficial.

Incidentally, the invention is not limited to the above-described embodiment, and various modifications can be carried out without departing from the concept of the invention. For example, in the above-described embodiment, the number of the reagent containers in the reagent storage unit is 3; however, the number of the reagent containers in the reagent storage unit is not limited thereto, and can be randomly set. In addition, the configurations and the forms of the processing units of the analysis device are not also limited to those described above, and can be variously changed according to the application.

Further, individual configurations described in the various embodiments described in the specification, such as the structure of the rack, the structure of the analyte or reagent holding portion, the conveyance unit to move and retrieve the rack, the reagent lid opening and closing mechanism, the configuration where the analyte transfer line or the reagent transfer line is aligned with the uniaxial transfer line L1 or L2, and other individual configurations can also be extracted from each of the embodiments as needed, and combined appropriately.

In addition, the specific positions I to IX described in the embodiment are provided as an example, and can be appropriately changed to positions conforming to conditions required by the invention described in the specification.

### EXPLANATIONS OF LETTERS OR NUMERALS

- 1: AUTOMATED ANALYSIS DEVICE
- 30: REAGENT SUPPLY UNIT
- 34: ROTARY TABLE
- 102: ADVANCING AND RETREATING MECHANISM
- 104: ROTATION MECHANISM
- 106: OPENING AND CLOSING OPERATION BODY
- 109: OPENING AND CLOSING ENGAGEMENT PORTION (ENGAGEMENT GROOVE)
- 132: REAGENT CONTAINER UNIT (CONTAINER TRIPLEX UNIT)
- 135A, 135B, 135C: REAGENT CONTAINER
- 137: CONTAINER LID
- 139: ENGAGEMENT PORTION
- 160: REAGENT CONTAINER LID OPENING AND CLOSING MECHANISM

## Claims

1. A reagent container lid opening and closing mechanism provided in an automated analysis device to obtain measurement information on a predetermined analysis item by processing an analyte with a reagent to be supplied from a reagent supply unit and by measuring the processed analyte, to open and close a container lid in the reagent supply unit, the container lid closing an opening of a reagent container storing the reagent, the mechanism comprising:
an opening and closing operation body being advanceable and retreatable, and including an opening and closing engagement portion to engage an engagement portion provided in an upper surface of the container lid of the reagent container;
an advancing and retreating mechanism to advance and retreat the opening and closing operation body along a longitudinal axis direction of the opening and closing operation body between a retreated position where the opening and closing operation body is separated from the reagent container, and an engaged position where an engagement groove of the opening and closing operation body engages the engagement portion of the container lid; and
a rotation mechanism to move the opening and closing operation body along a predetermined circular arc trajectory between the engaged position and a lid opening position where the container lid to engage the opening and closing operation body is opened to a state where the reagent is extractable from the reagent container.

2. The reagent container lid opening and closing mechanism according to claim 1,
wherein the opening and closing engagement portion of the opening and closing operation body is formed to engage the engagement portions of the container lids of a plurality of the reagent containers at the engaged position simultaneously, the reagent containers being aligned along an advancing and retreating direction of the opening and closing operation body.

3. An automated analysis device to obtain measurement information on a predetermined analysis item by processing an analyte with a reagent, and by measuring the processed analyte, the device comprising:
a reagent supply unit to supply the reagent corresponding to the predetermined analysis item; and
a reagent container lid opening and closing mechanism to open and close a container lid in the reagent supply unit, the container lid closing an opening of a reagent container storing the reagent,
wherein the reagent container lid opening and closing mechanism includes
an opening and closing operation body being advanceable and retreatable, and including an opening and closing engagement portion disengageably to engage an engagement portion provided in an upper surface of the container lid of the reagent container,
an advancing and retreating mechanism to advance and retreat the opening and closing operation body along a longitudinal axis direction of the opening and closing operation body between a retreated position where the opening and closing operation body is separated from the reagent container, and an engaged position where the opening and closing engagement portion of the opening and closing operation body engages the engagement portion of the container lid, and
a rotation mechanism to move the opening and closing operation body along a predetermined circular arc trajectory between the engaged position and a lid opening position where the container lid to engage the opening and closing operation body is opened to a state where the reagent is extractable from the reagent container.

4. The automated analysis device according to claim 3,
wherein the reagent supply unit includes a plurality of reagent container units in each of which a plurality of the reagent containers are integrally formed to be arranged along a radial direction of a rotary table, and
the opening and closing engagement portion of the opening and closing operation body is formed to engage the engagement portions of the container lids of the plurality of reagent containers at the engaged position simultaneously, the reagent containers forming the reagent container unit.

5. The automated analysis device according to claim 4,
wherein the rotary table is rotated at least between a container lid opening and closing position where the container lids are opened and closed by the reagent container lid opening and closing mechanism, and a reagent dispensing position where the reagent is to be dispensed to the analyte, and a stirring device is provided at the container lid opening and closing position to stir the reagent inside the reagent containers.
